# EUROPEAN PATENT APPLICATION

(11) **EP 4 790 661 A1**
(43) Date of publication of application: **12.08.2026**
(21) Application number: 26155741.7
(22) Date of filing: 02.02.2026
(51) Int. Cl.: G06V 20/52, G06V 40/10, G06V 40/20

(54) **SKELETON DETECTION APPARATUS, SKELETON DETECTION SYSTEM, SKELETON DETECTION METHOD, AND PROGRAM**

(30) Priority: 06.02.2025 JP 2025018417
(71) Applicant: Konica Minolta, Inc., Tokyo 100-7015 (JP)
(72) Inventor: KUSUMI, Gohei, Tokyo, 100-7015 (JP); SONE, Shingo, Tokyo, 100-7015 (JP)
(74) Representative: Gille Hrabal Partnerschaftsgesellschaft mbB Patentanwälte

(57) **Abstract**

A skeleton detection apparatus (20) includes an image acquisition section (211) that acquires an image (I), an image enlargement section (213) that generates an enlarged image (E1) by enlarging a predetermined area of the image (I), and a skeleton position information acquisition section (214) that acquires skeleton position information on a person (R1, R2, R3) included in the image (I) and the enlarged image (EI).

## Description

### BACKGROUND OF THE INVENTION

### TECHNICAL FIELD

The present disclosure relates to a skeleton detection apparatus, a skeleton detection system, a skeleton detection method, and a program.

### DESCRIPTION OF RELATED ART

Conventionally, as described in, for example, Zhe Cao, Tomas Simon, Shih En Wei, Yaser Sheikh, "Realtime Multi Person 2D Pose Estimation using Part Affinity Fields", The IEEE Conference on Computer Vision and Pattern Recognition (CVPR), 2017, p. 7291-7299, a skeleton detection system is known that acquires a plurality of image data from an acquired moving image and estimates and detects, by AI, the skeleton(s) of a person(s) captured in the plurality of image data.

### SUMMARY OF THE INVENTION

However, in such a system, for example, if a person is away from an imaging apparatus for moving images and the size of the person in image data is small, the skeleton cannot be detected. In a case where the skeleton cannot be correctly detected, for example, in a case where such a system is applied to a monitoring system in a factory, it is not possible to accurately detect a worker who has fallen at a place far from the imaging apparatus, a person who is entering a no-entry area, or the like, and it is likely that sufficient safety measures cannot be taken.

As a means for solving such a problem, use of a zoom magnification function of an imaging apparatus can be mentioned. However, when the zoom magnification function is used, a new problem arises in that an imaging area is reduced. As another solution, change of the installation position of the imaging apparatus is mentioned. However, the above-described solutions cannot be adopted in a case where it is necessary to capture a moving image at a determined position.

The present disclosure has been made in view of such circumstances. An object of the present disclosure is to provide a skeleton detection apparatus, a skeleton detection system, a skeleton detection method, and a program that are capable of detecting even the skeleton of a person who is located at a position distant from an imaging apparatus and accordingly is difficult to detect, without changing a method of acquiring image data.

To achieve at least one of the abovementioned objects, according to an aspect of the present disclosure, a skeleton detection apparatus reflecting one aspect of the present disclosure includes:
an image acquisition section that acquires an image;
an image enlargement section that generates an enlarged image by enlarging a predetermined area of the image; and
a skeleton position information acquisition section that acquires skeleton position information on a person included in the image and the enlarged image.

### BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present disclosure, and wherein:
FIG. 1 is a block diagram of a skeleton detection system according to a first embodiment;
FIG. 2 is a flowchart of a skeleton detection process according to the first embodiment;
FIG. 3 is an example of an image acquired by an image acquisition section;
FIG. 4 is an example of an image in which person rectangles are detected;
FIG. 5 is an example of an enlarged image;
FIG. 6 is an example of a skeleton-detected image;
FIG. 7 is an example of an image in which a rectangle including a predetermined object and a person rectangle are detected;
FIG. 8 is a block diagram of a skeleton detection system according to a second embodiment; and
FIG. 9 is a flowchart of a skeleton detection process according to the second embodiment.

### DETAILED DESCRIPTION

Hereinafter, one or more embodiments of the present disclosure will be described with reference to the drawings. However, the scope of the invention is not limited to the disclosed embodiments.

Hereinafter, a skeleton detection system including a skeleton detection apparatus according to embodiments of the present disclosure will be described in detail with reference to the drawings. However, the scope of the present disclosure is not limited to the illustrated examples. In the following description, components having the same functions and configurations are denoted by the same reference signs, and the descriptions thereof will be omitted.

### [First Embodiment]

### [Overall Configuration of Skeleton Detection System]

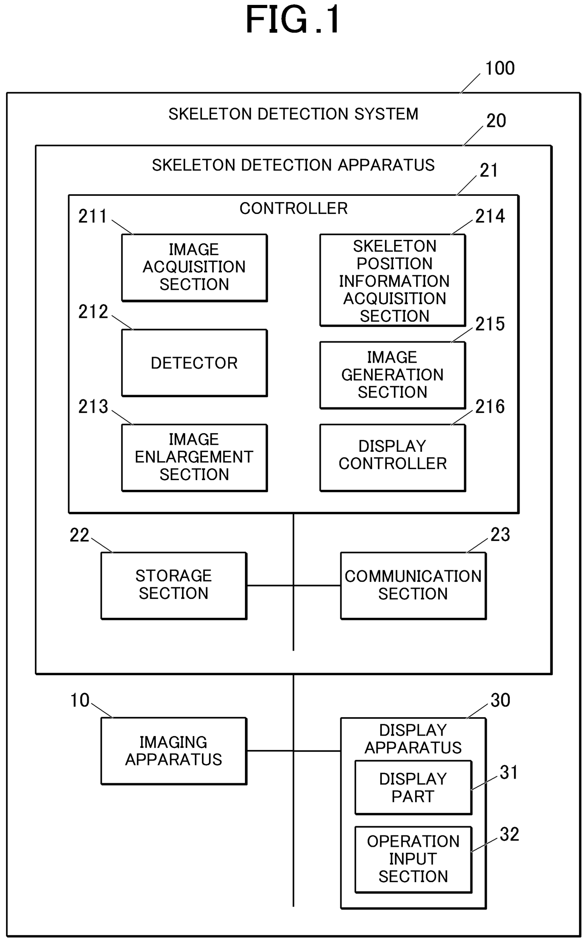

FIG. 1 is a block diagram illustrating a functional configuration of a skeleton detection system 100 according to a first embodiment. The skeleton detection system 100 is a system that detects a person(s) from an acquired moving image and detects the skeleton of the detected person. The skeleton detection system 100 includes, for example, an imaging apparatus 10, a skeleton detection apparatus 20, a display apparatus 30, and the like, and they are connected by, for example, a network.

### (Imaging Apparatus)

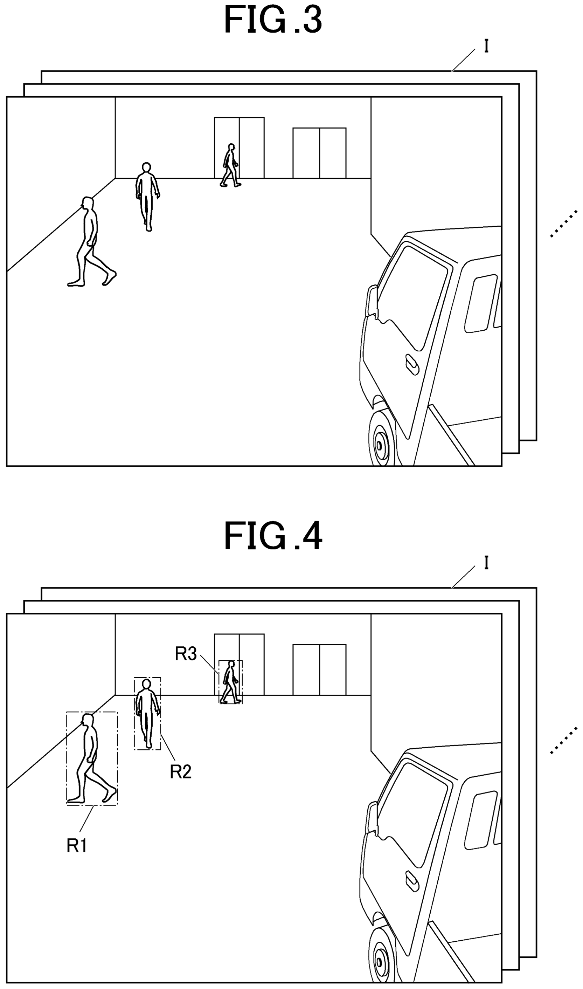

The imaging apparatus 10 is, for example, a camera. The imaging apparatus 10 generates images I (see FIG. 3) by performing imaging. Images generated by the imaging apparatus 10 may be monochrome images or color images.

### (Skeleton Detection Apparatus)

The skeleton detection apparatus 20 is an apparatus that detects the skeleton of a person(s) included in the acquired images I. The skeleton detection apparatus 20 is a tangible on-premise apparatus in the present embodiment, but is not limited thereto, and may be provided in a cloud environment without being tangible, for example. The skeleton detection apparatus 20 includes a controller 21, a storage section 22, and a communication section 23.

### {Controller}

The controller 21 includes a central processing unit (CPU), a random access memory (RAM), a read only memory (ROM), and the like. The controller 21 is a processor (computer) that comprehensively controls components constituting the skeleton detection apparatus 20 and the skeleton detection system 100. The CPU reads a program, such as an application program, stored in the storage section 22, loads the program to the RAM, and executes the program to perform various types of processing By the CPU executing the program, the controller 21 mainly functions as an image acquisition section 211, a detector 212, an image enlargement section 213, a skeleton position information acquisition section 214, an image generation section 215, and a display controller 216.

### <Image Acquisition Section>

The image acquisition section 211 acquires the images I from the imaging apparatus 10.

In the following example, the imaging apparatus 10 generates the images I by performing imaging over time at a predetermined frame rate, and the image acquisition section 211 acquires such continuous time-series images as the images I, but this is not a limitation. For example, the image acquisition section 211 may acquire one image I and detect the skeleton of a person(s) from the image I. Alternatively, the image acquisition section 211 may acquire a plurality of images I generated at different time points and detect the skeleton of the person from these images I. Furthermore, the image acquisition section 211 may acquire the image(s) I from, for example, a storage in which images generated by the imaging apparatus 10 are saved.

### <Detector>

The detector 212 detects the category of an object captured in each image I acquired by the image acquisition section 211.

Specifically, the detector 212 detects the presence of an object(s) from each image I. The detector 212 detects an area where an object exists on each image I as a rectangle candidate including the object by using a trained model stored in the storage section 22. Next, the detector 212 detects, as person rectangles R (see FIG. 4), rectangle candidates including objects whose categories are estimated to be a person. The person rectangles R are each a rectangular image area (coordinates) in which a person exists. As the trained model, a known model such as You Only Look Once (YOLO) or Single Shot multiBox Detector (SSD) may be used.

### <Image Enlargement Section >

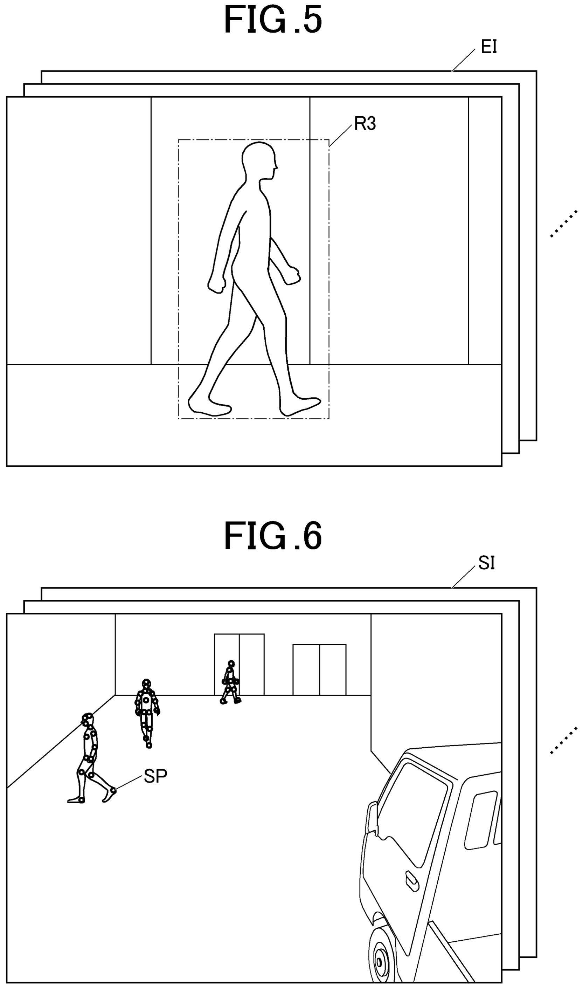

The image enlargement section 213 generates an enlarged image EI (see FIG. 5) by enlarging, in an image I including a person rectangle R whose size is smaller than a predetermined value among the images I, an area including the person rectangle R such that the size of the person rectangle R becomes equal to or larger than the predetermined value.

### <Skeleton Position Information Acquisition Section>

The skeleton position information acquisition section 214 estimates, from each image I and each enlarged image EI, skeleton position information on each person rectangle R that the detector 212 has estimated to be a person, to acquire the skeleton position information including the center coordinates of each part (nose, neck, etc.).

Specifically, the skeleton position information acquisition section 214 estimates the skeleton of a human using a trained model stored in the storage section 22, thereby acquiring the skeleton position information including the center coordinates of each part from the person rectangle R. Note that a known model such as OpenPose, PoseNet, or BlazePose can be used as the trained model.

### <Image Generation Section>

Based on each piece of skeleton position information acquired by the skeleton position information acquisition section 214, the image generation section 215 generates skeleton-detected images SI (see FIG. 6) that are images I in which skeleton points SP (see FIG. 6) are superimposed on the images.

### <Display Controller>

The display controller 216 causes a display part 31, which will be described later, of the display apparatus 30 to display the images I and the skeleton-detected images SI.

### {Storage Section}

The storage section 22 includes a nonvolatile semiconductor memory, a hard disk and/or the like. The storage section 22 stores the program to be executed by the controller 21, data required for executing the program, and various types of data obtained as results of the execution of the program by the controller 21. In particular, the storage section 22 stores the trained model used by the detector 212 to estimate the category of the object and the trained model used by the skeleton position information acquisition section 214 to acquire the skeleton position information.

### {Communication Section}

The communication section 23 includes a communication module. The communication section 23 transmits and receives various signals and various data to and from the imaging apparatus 10, the display apparatus 30, and other apparatuses connected via a network.

### (Display Apparatus)

The display apparatus 30 is, for example, a personal computer including the display part 31 that is a display and an operation input section 32 that is a keyboard, a mouse, and/or the like. When receiving a user operation on the operation input section 32, the display apparatus 30 displays the images I acquired from the imaging apparatus 10, the skeleton-detected images SI generated by the skeleton detection apparatus 20, and the like on the display part 31. Note that the skeleton detection apparatus 20 may have a component(s) corresponding to the display part 31 and the operation input section 32, and in such a case, the skeleton detection system 100 may not include the display apparatus 30.

### [Skeleton Detection Process (First Embodiment)]

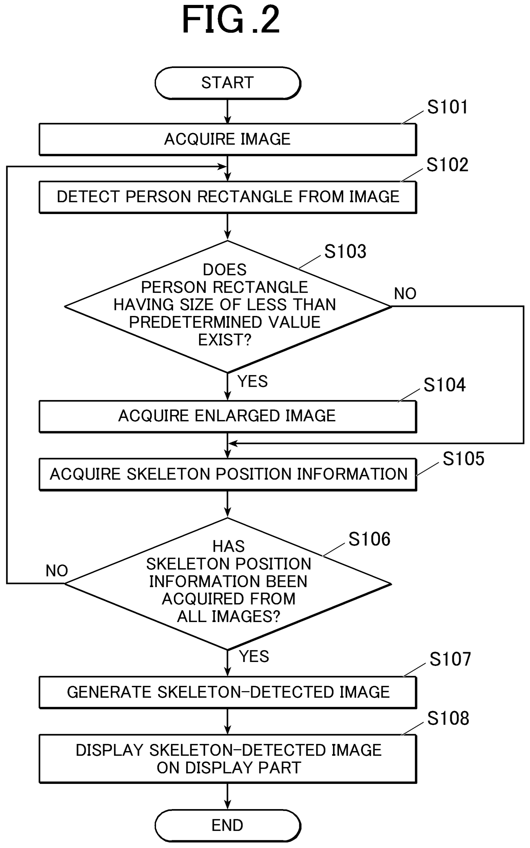

A skeleton detection process that is performed by the skeleton detection system 100 will be described with reference to the flowchart of FIG. 2 and FIG. 3 to FIG. 6.

First, the image acquisition section 211 acquires images I from the imaging apparatus 10 (Step S101; image acquisition step). An example of the images I is illustrated in FIG. 3. The detector 212 detects person rectangles R (R1 to R3) from an acquired image I as illustrated in FIG. 4 (Step S102; detection step). The image enlargement section 213 determines whether or not a person rectangle R having a size smaller than a predetermined value with which the skeleton position information acquisition section 214 can detect a skeleton position exists among the detected person rectangles R (Step S103).

When the person rectangle R having a size smaller than the predetermined value, such as the person rectangle R3 in FIG. 4, exists (Step S103; Yes), the image enlargement section 213 enlarges the area including the person rectangle R3. Through the process, the image enlargement section 213 acquires an enlarged image EI as illustrated in FIG. 5 in which the size of the person rectangle R3 is made to be equal to or larger than the predetermined value with which the skeleton position information acquisition section 214 can detect the skeleton position (Step S104; image enlargement step).

After performing Step S104, or when the person rectangle R having a size smaller than the predetermined value does not exist (Step S103; No), the skeleton position information acquisition section 214 acquires the skeleton position information from the person rectangle R in the image I and the enlarged image EI (Step S105; skeleton position information acquisition step). In this way, the skeleton position information acquisition section 214 acquires the skeleton position information based on both the one image I and the enlarged image EI corresponding to the one image I, and therefore it is possible to acquire highly accurate skeleton position information.

Upon acquiring the skeleton position information from one image I (including the enlarged image EI based on the one image I), the controller 21 determines whether the skeleton position information has been acquired from all the images I acquired in Step S101 (Step S106). When the skeleton position information has not been acquired from all the images I acquired in Step S101 (Step S106; No), the process proceeds to Step S102, and the skeleton position information on another image I is acquired.

When the skeleton position information has been acquired from all the images I acquired in Step S101 (Step S106; Yes), the image generation section 215 generates skeleton-detected images SI in which skeleton points SP are superimposed on the images I, based on the skeleton position information (Step S107; image generation step). An example of the skeleton-detected images SI is shown in FIG. 6. At the time, if an enlarged image EI has been acquired in Step S104, based on the similarly acquired skeleton position information, the skeleton points SP are superimposed on the person (in the present example, the person corresponding to the person rectangle R3) in its corresponding image I. The display controller 216 displays the generated skeleton-detected images SI on the display part 31 of the display apparatus 30 (Step S108; display control step).

### [Effects of First Embodiment]

As described above, the skeleton detection apparatus 20 of the skeleton detection system 100 according to the present embodiment includes the image acquisition section 211 that acquires an image(s) I. Furthermore, the skeleton detection apparatus 20 includes the image enlargement section 213 that generates an enlarged image EI by enlarging a predetermined area of the image I. Furthermore, the skeleton detection apparatus 20 includes the skeleton position information acquisition section 214 that acquires skeleton position information on a person included in the image I and the enlarged image EI. According to the above-described configuration, since the image enlargement section 213 generates the enlarged image EI from the image I without changing the generation condition of the image I by the imaging apparatus 10. Therefore, it is possible to detect the skeleton of a person who is located at a position distant from the imaging apparatus 10 and accordingly is difficult to detect.

Furthermore, by applying the skeleton detection system 100 to, for example, a monitoring system in a factory, it is possible to accurately detect a worker who has fallen at a place away from the imaging apparatus 10, a person who is entering a no-entry area, or the like. Therefore, it is possible to take sufficient safety measures.

Furthermore, the skeleton detection apparatus 20 of the skeleton detection system 100 according to the present embodiment includes the detector 212 that detects a person from the image I. The image enlargement section 213 enlarges, as a predetermined area, an area including a person who has been detected by the detector 212 and whose skeleton position information cannot be acquired by the skeleton position information acquisition section 214. According to the above configuration, it is possible to automatically acquire the skeleton position information on all the persons in the image I, thereby saving the user's time and effort.

### [Configurations of First Embodiment]

In the above, the image enlargement section 213 enlarges the area including the person rectangle R having a size equal to or smaller than the predetermined value among the persons detected by the detector 212, but this is not a limitation.

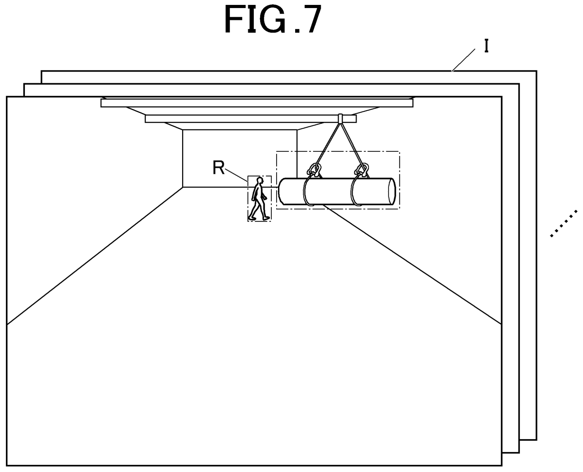

For example, as shown in FIG. 7, in a case where the detector 212 detects that the category of an object is a predetermined object (moving object or the like) which is dangerous if a person comes into contact therewith, the predetermined object and the person are both captured in the image I, and the distance between these two is equal to or less than a predetermined value, the area to be enlarged by the image enlargement section 213 may be determined, following the predetermined object. According to the configuration, by enlarging the person captured together with the predetermined object, it is possible to increase the detection accuracy of the skeleton and to more reliably sense a danger to the person.

Furthermore, in the above, the image enlargement section 213 enlarges an area where a predetermined object and a person are captured together having a predetermined distance or less in between, but this is not a limitation. For example, the image enlargement section 213 may enlarge an area where a predetermined object is captured, in consideration of a case where the detector 212 has not been able to detect a person.

Furthermore, FIG. 7 illustrates the case where the predetermined object is a load lifted by a crane, but this is not a limitation. The predetermined object may be, for example, a vehicle such as a forklift, a platform truck, an autonomous mobile robot (AMR), or an automatic guided vehicle (AGV).

### [Second Embodiment]

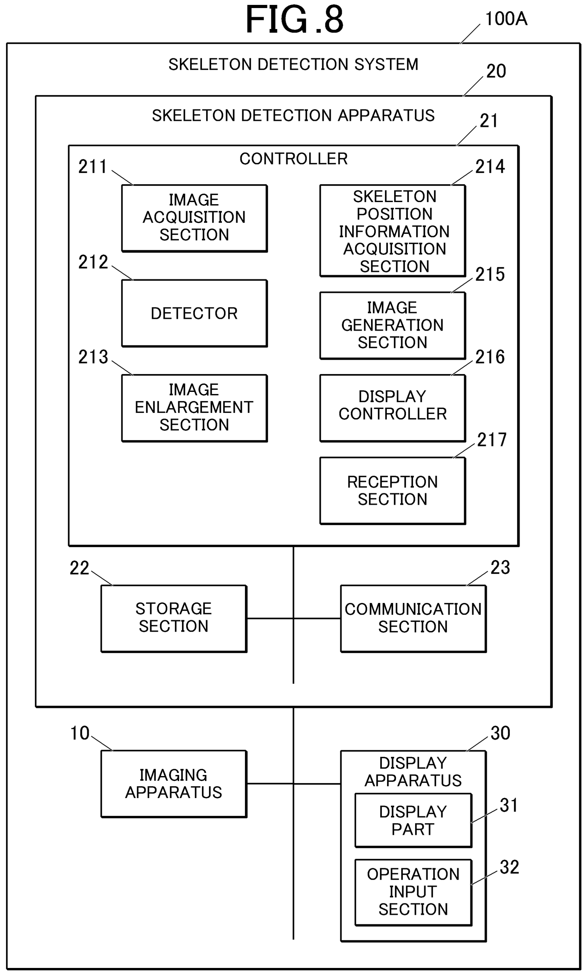

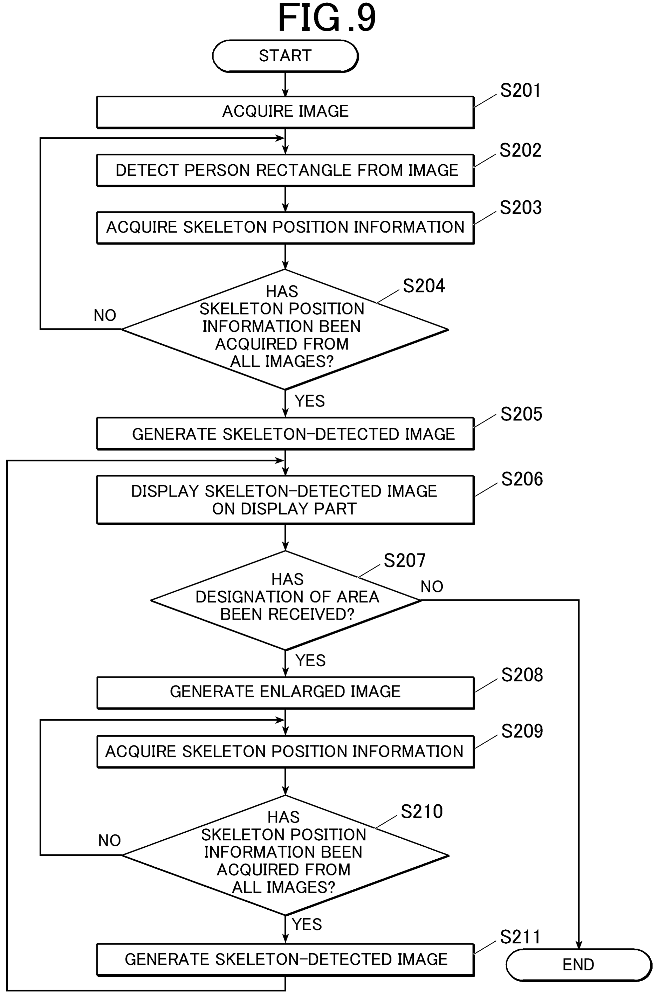

Next, a skeleton detection system 100A according to a second embodiment will be described with reference to FIG. 8 and FIG. 9. Note that the components same as those of the skeleton detection system 100 according to the first embodiment are denoted by the same reference signs, and detailed descriptions thereof will be omitted. The skeleton detection system 100A according to the second embodiment is different from the skeleton detection system 100 according to the first embodiment in that the controller 21 of the skeleton detection apparatus 20 functions as a reception section 217.

In the skeleton detection system 100 according to the first embodiment, the image enlargement section 213 automatically enlarges the area including the person rectangle R having a size smaller than the predetermined value, thereby generating the enlarged image EI. However, in the above-described configuration, for example, in a case where it is unnecessary to detect the skeleton of a person whose size in the image I is less than the predetermined value, extra time and effort are spent for the skeleton detection process, and the completion speed decreases.

### <Reception Section>

Therefore, when the skeleton-detected image(s) SI is displayed on the display part 31, the controller 21 of the skeleton detection apparatus 20 according to the present embodiment functions as a reception section 217 that receives designation of an area, and instructions to enlarge the area and to detect the skeleton made by the user operating the operation input section 32. Then, when the reception section 217 receives the designation of the area, the image enlargement section 213, the skeleton position information acquisition section 214, and the image generation section 215 cooperate to generate the enlarged images EI and generate the skeleton-detected images SI again.

[Skeleton Detection Process (Second Embodiment)] The skeleton detection process that is performed by the skeleton detection system 100A according to the second embodiment will be described with reference to the flowchart of FIG. 9. Note that Steps S201-S206 are the same as Step S101, Step S102, and Steps S105-S108 in FIG. 2, and thus detailed descriptions thereof will be omitted.

When the skeleton detection apparatus 20 generates the skeleton-detected images SI from the images I and causes the display part 31 to display them according to Steps S201 to Step S206, the reception section 217 determines whether or not designation of an area in the skeleton-detected images SI has been received through the operation input section 32 (Step S207). Note that in Step S207, designation of a plurality of areas may be received at a time.

If designation of an area has not been received (Step S207; No), the controller 21 ends the skeleton detection process. If designation of an area has been received (Step S207; Yes; reception step), the image enlargement section 213 generates enlarged images EI by enlarging the area in all the images I (Step S208). Further, as in Step S107, the skeleton position information acquisition section 214 acquires skeleton position information from the enlarged images EI (Step S209).

When acquiring the skeleton position information from one enlarged image EI, the controller 21 determines whether or not the skeleton position information has been acquired from all the enlarged images EI generated in Step S208 (Step S210). If the skeleton position information has not been acquired from all the enlarged images EI (Step S210; No), the process proceeds to Step S209, and the skeleton position information is acquired from another enlarged image EI. If the skeleton position information has been acquired from all the enlarged images EI (Step S210; Yes), the skeleton-detected images SI are generated again on the basis of the skeleton position information (Step S211), and the process proceeds to Step S206.

### [Effects of Second Embodiment]

As described above, in the skeleton detection system 100A according to the second embodiment, the skeleton detection apparatus 20 includes the reception section 217 that receives designation of a predetermined area based on a user's operation instruction. According to the above configuration, the skeleton can be detected by designating a person whose skeleton position information cannot be acquired by the skeleton position information acquisition section 214 but is wanted by the user, and therefore it is possible to minimize processes to be executed.

### [Other Configurations of Second Embodiment]

Note that in the above, in Step S207 and Step S208, when designation of an area is received, the areas of all the images I are enlarged to generate the enlarged images EI, but this is not a limitation.

For example, particularly in a case where in a plurality of images I over time, a person whose size is less than a predetermined value is moving, if the designation-received area is narrow, the skeleton position information is acquired from the enlarged image EI in which the person is not present, and unnecessary processes occur. On the other hand, if the designation-received area is large, even when the enlarged image EI is generated, the size of the person rectangle may be insufficient or the detection accuracy may decrease.

Therefore, for example, the reception section 217 may receive, together with the designation of the area, designation of a range of images I among the plurality of images I to generate enlarged images EI by enlarging the area from the mages I. Alternatively, the controller 21 may automatically detect, from another skeleton-detected image SI, a person rectangle R having the same characteristics as the person rectangle R in the designation-received area, automatically specify an area including the person rectangle R, and cause the image enlargement section 213 to enlarge the area.

Furthermore, in the above, the reception section 217 receives designation of an area after the skeleton-detected images SI are generated once, but not limited thereto. The reception section 217 may first receive designation of an area from the user and then generates the skeleton-detected images SI.

### [Other Configurations Related to Whole]

Although specific description has been given above based on some embodiments according to the present disclosure, the present disclosure is not limited to the above-described embodiments. It is needless to say that the present disclosure can be changed in various aspect within the range of claims and their equivalents.

For example, although the skeleton detection processes according to the first and second embodiments has been described above, the skeleton detection system 100 may be configured to be able to switch the processes to execute, based on an operation on the operation input section 32, that is, a user's instruction. Further, the skeleton detection system 100 according to the first embodiment may be configured to be able to switch whether the image enlargement section 213 automatically generates the enlarged image EI, based on a user's instruction.

Further, FIG. 6 illustrates the configuration in which the display controller 216 causes the display part 31 to display only the skeleton-detected images SI as a result of the skeleton detection process, but not limited thereto. The display controller 216 may cause the display part 31 to display a corresponding enlarged image(s) EI together with the skeleton-detected image(s) SI. Such a configuration makes it clear to the user that the skeleton information acquisition section 214 acquires skeleton information on the basis of the enlarged image EI. Further, FIG. 2 and FIG. 9 illustrate the configuration in which as the final process of the skeleton detection process, the display controller 216 causes the display part 31 to display the skeleton-detected images SI, but not limited thereto. The display controller 216 may cause the display part 31 to display, for example, only the skeleton position information including the center coordinates of each part.

Further, for example, in the above, as the computer-readable medium storing the programs according to the present disclosure, a hard disk, a semiconductor nonvolatile memory, or the like is used, but this is not a limitation. As the computer-readable medium, a portable recording medium such as a CD-ROM can be applied. Further, a carrier wave is also applied as a medium for providing data of the programs according to the present disclosure via a communication line.

Although embodiments of the present disclosure have been described and illustrated in detail, the disclosed embodiments are made for purposes of illustration and example only and not limitation. The scope of the present disclosure should be interpreted by terms of the appended claims.

## Claims

1. A skeleton detection apparatus (20) comprising:
an image acquisition section (211) that acquires an image (I);
an image enlargement section (213) that generates an enlarged image (EI) by enlarging a predetermined area of the image (I); and
a skeleton position information acquisition section (214) that acquires skeleton position information on a person (R1, R2, R3) included in the image (I) and the enlarged image (EI).

2. The skeleton detection apparatus (20) according to claim 1, further comprising a reception section (217) that receives a designation of the predetermined area based on a user's operation instruction.

3. The skeleton detection apparatus (20) according to claim 2, wherein the image (I) includes a plurality of images (I), and wherein the reception section (217) receives a designation, among the plurality of images (I), an image (I) the predetermined area of which is to be enlarged by the image enlargement section (213), together with the designation of the predetermined area.

4. The skeleton detection apparatus (20) according to claim 2, wherein the image enlargement section (213) enlarges, as the predetermined area, an area in one (I) of the images (I), the area the designation of which has been received by the reception section (217), and an area in another one (I) of the images (I), the area including a person (R1, R2, R3) estimated to be identical with a person (R1, R2, R3) in the area of the one (I) of the images (I).

5. The skeleton detection apparatus (20) according to claim 1, further comprising a detector (212) that detects the person (R1, R2, R3) included in the image (I),
wherein the image enlargement section (213) enlarges, as the predetermined area, an area including the person (R3) detected by the detector (212) and having a size of less than a predetermined value.

6. The skeleton detection apparatus (20) according to claim 5, wherein the image enlargement section (213) generates the enlarged image (EI) in response to a user's operation instruction.

7. The skeleton detection apparatus (20) according to claim 1, further comprising a detector (212) that detects one or more objects included in the image (I),
wherein the image enlargement section (213) enlarges, as the predetermined area, an area including a predetermined object among the one or more objects detected by the detector (212).

8. The skeleton detection apparatus (20) according to claim 1, further comprising:
an image generation section (215) that generates a skeleton-detected image (SI) in which a skeleton point (SP) based on the skeleton position information is superimposed on the image (I); and
a display controller (216) that causes a display part (31) to display the skeleton-detected image (SI).

9. The skeleton detection apparatus (20) according to claim 8, wherein the display controller (216) causes the display part (31) to display the skeleton-detected image (SI) and the enlarged image (EI) corresponding to the skeleton-detected image (SI) together.

10. A skeleton detection system (100) comprising:
the skeleton detection apparatus (20) according to any one of claims 1 to 9;
an imaging apparatus (10) that generates an image (I); and
a display apparatus (30) including a display part (31) and an operation input section (32).

11. A skeleton detection method that is performed by a skeleton detection apparatus (20), comprising:
acquiring an image (I) (S101);
generating an enlarged image (EI) by enlarging a predetermined area of the image (I) (S104); and
acquiring skeleton position information on a person (R1, R2, R3) included in the image (I) and the enlarged image (EI) (S105).

12. A program causing a computer of a skeleton detection apparatus (20) to:
acquire an image (I);
generate an enlarged image (EI) by enlarging a predetermined area of the image (I); and
acquire skeleton position information on a person (R1, R2, R3) included in the image (I) and the enlarged image (EI).
